# EUROPEAN PATENT SPECIFICATION

(11) **EP 2 930 975 B1**
(45) Date of publication and mention of the grant of the patent: **06.02.2019**
(21) Application number: 13860198.4
(22) Date of filing: 21.10.2013
(51) Int. Cl.: H04W 36/00, H04W 8/12

(54) **METHOD AND MME FOR PROCESSING A CIRCUIT SWITCHED NETWORK SERVICE**
VERFAHREN UND MME ZUR VERARBEITUNG EINES LEITUNGSVERMITTELTEN NETZWERKDIENSTES
PROCÉDÉ ET MME POUR TRAITER UN SERVICE DE RÉSEAU À COMMUTATION DE CIRCUITS

(30) Priority: 06.12.2012 CN 201210519625
(43) Date of publication of application: 14.10.2015
(73) Proprietor: ZTE Corporation, Shenzhen, Guangdong 518057 (CN)
(72) Inventor: LIU, Jingxiang, Shenzhen Guangdong 518057 (CN); CAO, Xiaofei, Shenzhen Guangdong 518057 (CN); YU, Lei, Shenzhen Guangdong 518057 (CN)
(74) Representative: Deambrogi, Edgardo
(86) International application number: PCT/CN2013/085572
(87) International publication number: WO 2014/086208

(56) References cited:
- CN-A- 102 984 777
- US-A1- 2011 269 455
- US-A1- 2011 269 455
- ALCATEL-LUCENT: "Provide Subscriber Information handling for UE under LTE", 3GPP DRAFT; C4-112279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Hyderabad; 20111010, 1 October 2011 (2011-10-01), XP050536154, [retrieved on 2011-10-01]
- "Digital cellular telecommunications system (Phase 2+); Universal Mobile Telecommunications System (UMTS); LTE; Circuit Switched (CS) fallback in Evolved Packet System (EPS); Stage 2 (3GPP TS 23.272 version 10.4.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V10.4.0, 1 June 2011 (2011-06-01), XP014065847,
- "3rd Generation Partnership Project; Technical Specification Group Core Network and Terminals; Basic call handling; Technical realization (Release 10)", 3GPP STANDARD; 3GPP TS 23.018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 4 April 2011 (2011-04-04), pages 1-289, XP050476908, [retrieved on 2011-04-04]
- CT4: "Reply LS on Roaming Forwarding of signalling for CS fall back", 3GPP DRAFT; S2-140041_C4-132287, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Taipei, Taiwan; 20140120 - 20140124 19 January 2014 (2014-01-19), XP050744417, Retrieved from the Internet: URL:http://www.3gpp.org/ftp/Meetings_3GPP_ SYNC/SA/SA2/Docs/ [retrieved on 2014-01-19]

## Description

### Technical Field

The embodiments of the present invention relates to the field of communications, in particular to a method, an apparatus, and a mobility management entity (referred to as MME) for processing a circuit switched network service.

### Background

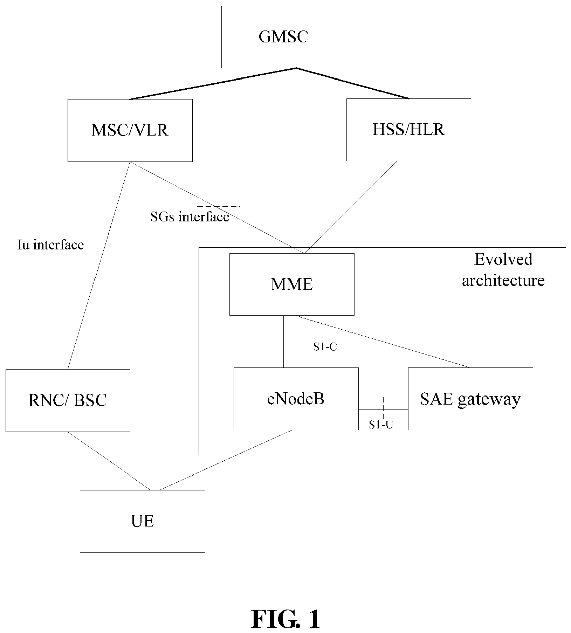

A system architecture evolution (referred to as SAE) network is a new generation of radio network technology formulated by the 3rd generation partnership project (referred to as 3GPP) organization for replacing a traditional circuit switched network. The system architecture evolution network includes long term evolution (referred to as LTE) air interfaces and an evolved packet core (referred to as EPC) network. The architecture of the system architecture evolution network is shown in figure 1, and the function of each network element is described as follows.

A user equipment (referred to as UE). The user equipment has the capability of accessing two radio networks, which are a universal mobile telecommunication system radio access network/GSM EDGE radio access network (referred to as UTRAN/GERAN, referring to a radio network of a GPRS, wherein the UTRAN represents 3G and the GERAN represents 2G) and the LTE network. Because of the capability limitation and the power saving requirement, the UE can only reside in one radio system (referred to as Signal Radio) at one moment, for example, when residing in the LTE network, the UE cannot receive a paging message from the UTRAN/GERAN at this moment.

An evolved NodeB (referred to as eNodeB). The evolved NodeB may provide an uplink and a downlink rate higher than the UTRAN on the air interface, and a lower transmission delay and more reliable radio transmission. The eNodeB provides radio resources for the access of a terminal, and establishes an S1 control plane link with the MME of the core network.

The mobile management entity (MME), as a control plane entity which is a server for temporarily storing subscriber data, is responsible for managing and storing the context of the UE (such as a UE/a subscriber identity, a mobility management state and a subscriber security parameter), and allocates a temporary identity, i.e. a globally unique temporary identity (referred to as GUTI) for the UE; and the MME is responsible for authenticating the subscriber when the subscriber accesses from the LTE network.

The SAE gateway (referred to as SAE GW), as a subscriber plane entity, is responsible for routing processing of subscriber plane data. The SAE GW is generally divided into a serving gateway (Serving GW) and a packet data network gateway (referred to as PDN GW); the Serving GW is responsible for mobility anchoring between the LTE network and universal mobile telecommunications system (referred to as UMTS); downlink data triggering the MME and a serving GPRS supporting node (referred to as SGSN) in the idle state to perform paging; and the PDN GW is responsible for the gateway function of the UE accessing the packet data network (PDN), and allocates an IP (Internet Protocol) address for the subscriber. The PDN GW and the Serving GW may be integrated in a physical entity.

A home subscriber server (referred to as HSS) is configured to store subscription data of the subscriber, and record an MME name (MME NAME) where the subscriber is located.

Meanwhile, Fig. 1 provides architecture of a traditional circuit switched network. The core network element includes a mobile switching center (referred to as MSC) and a visitor location register (referred to as VLR); and in general, the MSC and VLR are physically integrated together.

A 3G radio network controller (referred to as RNC) or a base station controller (referred to as BSC) is responsible for controlling and managing radio activities of the subscriber.

The traditional circuit switched network utilizes a home location register (referred to as HLR) to store subscription information about the subscriber and the address of the VLR. During a called call, the HLR may obtain a mobile subscriber roaming number (referred to as MSRN) of the subscriber from the VLR. As shown in Fig. 1, one physical network element holds the post of the HLR and the HSS.

A gateway mobile switching center (referred to as GMSC) is configured to route the call to the MSC where the subscriber is located. When there is a call of a mobile subscriber, the GMSC obtains the MSRN of the subscriber via the HLR, and then routes the call according to the MSRN.

An MME network element of the SAE and the VLR of the traditional circuit switched network are connected via an SGs interface.

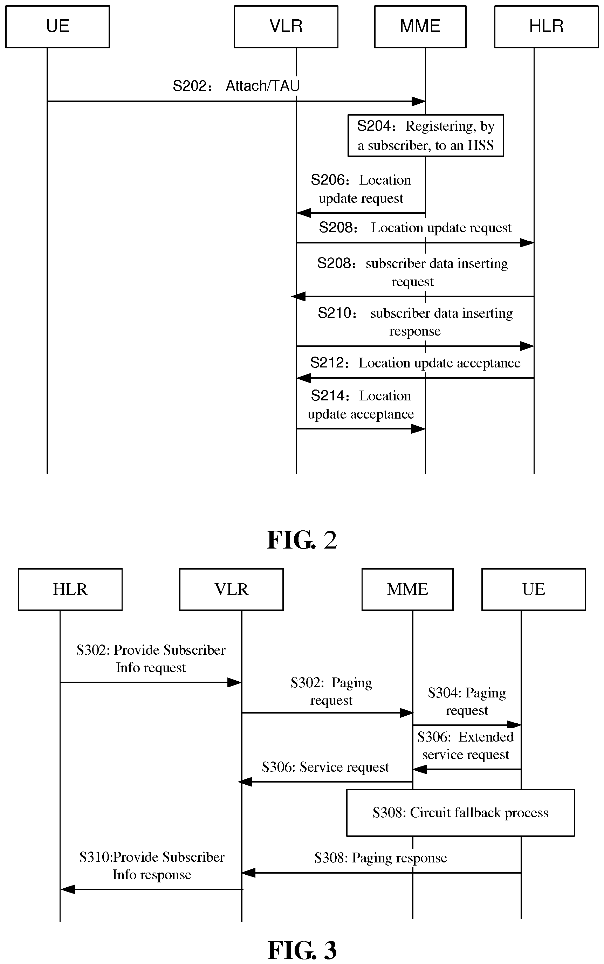

It is a long term trend that the SAE network replaces the traditional circuit switched network. During this process, the radio coverage of the traditional circuit switched network is relatively good, and the service is relatively stable, thus the traditional circuit switched network is an effective supplement of the SAE network, when the SAE cannot provide a satisfactory traditional voice service, the traditional circuit switched network may be turned to for providing a related service, instead. The mechanism of falling back to the traditional circuit switched network is called circuit switch fallback (CSFB) technology. The UE which can fall back to the traditional circuit switched network to perform service is called dual mode single radio UE. The SGs interface between the MME of the SAE and the VLR of the traditional circuit switched network is established by the CSFB technology. Through the interface, the MME may enable the UE roaming in the LTE network to trigger a location update flow of the traditional circuit switched network so that the UE registers in the traditional circuit switched network while being active in the SAE. As shown in Fig. 2, the process includes the following steps:
Step S202: a UE in an LTE network starts up or changes a tracking area (referred to as TA), and initiates start-up (ATTACH) or tracking area update (referred to as TAU) operations.
Step S204: after receiving the above-mentioned message, an MME performs a registration from an SAE to an HSS.
Step S206: after the registration is successful, the MME deduces a location area identity (referred to as LAI) of the UE in a traditional circuit switched network through the tracking area where the UE is located, and locates same to a corresponding VLR. The MME sends a location update request to the VLR via an SGs interface.
Step S208: if the VLR does not have subscriber data, or the VLR deems the subscriber data unreliable, the VLR sends the location update request to an HLR.
Step S210: the HLR inserts the subscriber data into the VLR, and the VLR records subscription data of a subscriber, and returns a response.
Step S212: the HLR returns a success response of the location update, and records a number of the VLR where the subscriber is located.
Step S214: the VLR returns a location update complete message to the MME, and modifies a state of the SGs interface to be active.

After registering at the HLR, the subscriber is able to receive a non-call service from the traditional circuit switched network in a CSFB manner. Fig. 3 shows a processing flow after the VLR receives Provide Subscriber Info (referred to as PSI); and as shown in Fig. 3, the above-mentioned flow includes the following steps:
Step S302: VLR receives a PSI message sent by the HLR, since the UE registers on the VLR via SGs interface location update, the VLR sends the SGs interface paging message (Paging) to the MME.
Step S304: the MME initiates a paging process in the LTE network; the UE receiving the paging returns an extended service request.
Step S306: the MME returns an SGs interface service request to the VLR.
Step S308: the UE after the paging falls back to the circuit switched network, and initiates a paging response from the traditional circuit switched network.
Step S310: the VLR receiving the paging response acquires a subscriber location, and returns a PSI response message to the HLR.

During the above-mentioned process, in order to receive the circuit switched network service, the UE switches from the LTE network to the traditional circuit switched network; however, this process increases the message traffic of the network, and there are possibilities of the occurrence of the interruption of the UE in an LTE network service, which is a very inefficient for the network. The same problem also exists when the UE receives a call-irrelevant supplementary service in a called manner.

As regards at least one of the problems mentioned above in the related art, no effective solution has been presented;

The documents D1 (ALCATEL-LUCENT: "Provide Subscriber Information handling for UE under LTE", 3GPP DRAFT: C4-112279, 1 October 2011), D2 (US 2011 /269455) and D3 ("Digital cellular telecommunications system (Phase 2+);Universal Mobile Telecommunications System (UMTS); LTE; Circuit Switched (CS) fallback in Evolved Packet System (EPS);Stage 2 (3GPP TS 23.272 version 10.4.0 Release 10)", 1 June 2011) provide other technical solutions; however, the above mentioned problem still remains unsolved.

### Summary of the Invention

The embodiments of the present invention provide a method and a MME for processing a circuit switched network service so as to at least solve the problem in the related art that the UE needs to fall back to the traditional circuit switched network so as to receive the circuit switched network service.

According to an embodiment of the present invention, a method for processing a circuit switched network service is provided according to claim 1.

In the described embodiment, the mobility management entityinteracting, by , with a user equipment corresponding to the request, and processing the circuit switched network service includes: the mobility management entity acquires subscriber information of the user equipment in a case where the circuit switched network service is a Provide Subscriber Info (PSI) service; and the mobility management entity feeds back the subscriber information to the VLR.

In the described embodiment, the mobility management entity interacts with the user equipment corresponding to the request, and processes the circuit switched network service includes: the mobility management entity sends supplemental content requested by a call-irrelevant supplementary service to the user equipment to execute the call-irrelevant supplementary service in a case where the circuit switched network service is the call-irrelevant supplementary service; and the mobility management entity feeds back an execution result of the user equipment to the VLR.

In the described embodiment, before the mobility management entity receives the request for performing the circuit switched network service, the method for processing a circuit switched network service further includes: the mobility management entity receives a paging message sent by the VLR, wherein the paging message includes second indication information which is used for indicating that the VLR does not support the forwarding of the circuit switched network service; and/or the mobility management entity sends fourth indication information to the VLR, wherein the fourth indication information is used for indicating that the mobility management entity does not support the forwarding of the circuit switched network service; and the mobility management entity triggers the flow of making the user equipment fall back to a circuit switched network.

According to another embodiment of the present invention, a mobile management entity, MME, is provided according to claim 4. The embodiments and/or examples of the following description which are not covered by the appended claims are considered as not being part of the present invention.

In the described embodiment, the processing component includes: a processing unit, configured to acquire subscriber information of the user equipment in a case where the circuit switched network service is a Provide Subscriber Info (PSI) service; and a sending unit, configured to feed back the subscriber information to the VLR.

According to still another embodiment of the present invention, an MME is provided, including: any one of the apparatus for processing a circuit switched network service.

In the embodiments of the present invention, receiving, by the mobility management entity, the request for performing the circuit switched network service, and interacting with a user equipment corresponding to the request and processing the circuit switched network service achieves that the UE does not fall back to the circuit switched network, and also solves the problem of receiving the circuit switched network service, which avoids the case where the UE falls back to the circuit switched network to receive the circuit switched network service, thereby reducing network consumption and enhancing the network efficiency, and being helpful to improve the user experience.

### Brief Description of the Drawings

Drawings, provided for further understanding of the present invention and forming a part of the specification, are used to explain the present invention together with embodiments of the present invention rather than to limit the present invention. In the drawings:
Fig. 1 is an architecture diagram of an SAE and a traditional circuit switched network according to the related art;
Fig. 2 is an interaction diagram of a UE performing a traditional circuit switched network registration in an LTE network according to the related art;
Fig. 3 is an interaction diagram of a UE falling back to a traditional circuit switched network and receiving a PSI request of the traditional circuit switched network in an LTE network according to the related art;
Fig. 4 is a flowchart of a method for processing a circuit switched network service according to an embodiment of the present invention;
Fig. 5 is a structure diagram of an apparatus for processing a circuit switched network service according to an embodiment of the present invention;
Fig. 6 is a structure diagram of another apparatus for processing a circuit switched network service according to an embodiment of the present invention;
Fig. 7 is an interaction diagram of using a method for processing a circuit switched network service to process a PSI service according to an embodiment of the present invention; and
Fig. 8 is an interaction diagram of using a method for processing a circuit switched network service to process a call-irrelevant supplementary service according to an embodiment of the present invention.

### Detailed Description of the Embodiments

The present invention is described below in detail with reference to the accompanying drawings in conjunction with embodiments. Note that, the embodiments of the present invention and the features of the embodiments can be combined with each other if there is no conflict.

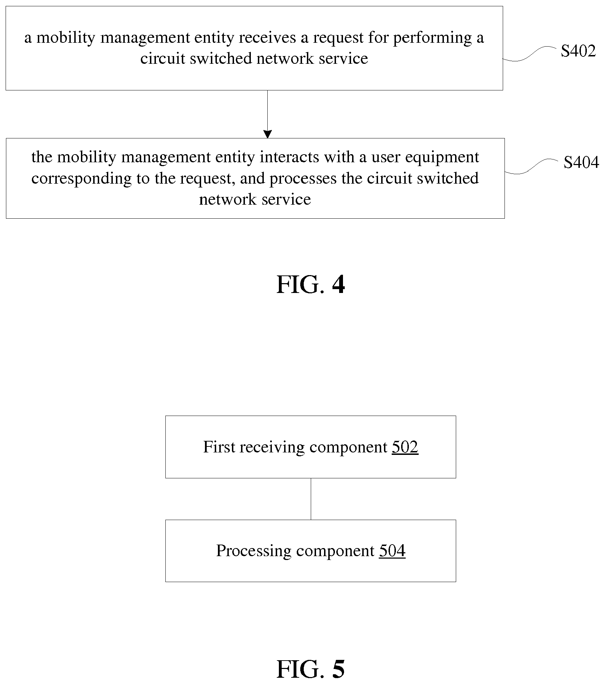

The present embodiment provides a method for processing a circuit switched network service; and as shown in Fig. 4, the method for processing a circuit switched network service includes step S402 to step S404.

Step S402: a mobility management entity receives a request for performing a circuit switched network service.

Step S404: the mobility management entity interacts with the user equipment corresponding to the request, and processes the circuit switched network service.

by means of the above-mentioned steps, the mobility management entity receives the request for performing the circuit switched network service, and interacts with the user equipment corresponding to the above-mentioned request and processes the above-mentioned circuit switched network service, and thereby solves the problem that the UE can receive the circuit switched network service without falling back to the circuit switched network, which avoids the case where the UE falls back to the circuit switched network to receive the circuit switched network service, thereby reducing network consumption and enhancing the network efficiency, and being helpful to improve the user experience.

In the described embodiment, the above-mentioned mobility management entity receives the above-mentioned request forwarded by a VLR. In the described embodiment, the above-mentioned VLR may forward the above-mentioned request to the above-mentioned mobility management entity via an SGs interface.

In order to successfully complete the forwarding of the above-mentioned circuit switched network service, in the present example embodiment, before the mobility management entity receives the request for performing the circuit switched network service, the method for processing the circuit switched network service further includes: the mobility management entity receives a paging message sent by the above-mentioned VLR, wherein the above-mentioned paging message includes first indication information which is used for indicating that the above-mentioned VLR supports the forwarding of the above-mentioned circuit switched network service; and the above-mentioned mobility management entity sends second indication information to the above-mentioned VLR, wherein the above-mentioned second indication information is used for indicating that the above-mentioned mobility management entity supports the forwarding of the above-mentioned circuit switched network service, and receives the above-mentioned circuit switched network service forwarded by the above-mentioned VLR.

In the described embodiment, interacting, by the above-mentioned mobility management entity, with a user equipment corresponding to the above-mentioned request, and processing the above-mentioned circuit switched network service includes: the above-mentioned mobility management entity acquires subscriber information of the user equipment in a case where the above-mentioned circuit switched network service is a Provide Subscriber Info (PSI) service; and the above-mentioned mobility management entity feeds back the above-mentioned subscriber information to the above-mentioned VLR. In the described embodiment, the above-mentioned mobility management entity may feed back the above-mentioned subscriber information to the above-mentioned VLR via the SGs interface.

In the described embodiment, the above-mentioned mobility management entity interacts with the user equipment corresponding to the above-mentioned request, and processes the above-mentioned circuit switched network service includes: the above-mentioned mobility management entity sends supplemental content requested by a call-irrelevant supplementary service to the above-mentioned user equipment to execute the above-mentioned call-irrelevant supplementary service in a case where the above-mentioned circuit switched network service is the call-irrelevant supplementary service; and the above-mentioned mobility management entity feeds back an execution result of the above-mentioned user equipment to the above-mentioned VLR. In the described embodiment, the above-mentioned mobility management entity may feed back the execution result of the above-mentioned user equipment to the above-mentioned VLR via the SGs interface.

In order to enhance the network efficiency, in the present example embodiment, before the above-mentioned mobility management entity receives the request for performing the circuit switched network service, the above-mentioned method for processing a circuit switched network service further includes: the above-mentioned mobility management entity receives a paging message sent by the above-mentioned VLR, wherein the above-mentioned paging message includes second indication information which is used for indicating that the above-mentioned VLR does not support the forwarding of the above-mentioned circuit switched network service; and/or the above-mentioned mobility management entity sends fourth indication information to the above-mentioned VLR, wherein the above-mentioned fourth indication information is used for indicating that the above-mentioned mobility management entity does not support the forwarding of the above-mentioned circuit switched network service; and the above-mentioned mobility management entity triggers the flow of making the user equipment fall back to a circuit switched network.

The present example embodiment provides an apparatus for processing a circuit switched network service; and as shown in Fig. 5, the apparatus for processing a circuit switched network service includes: a first receiving component **502,** configured to receive a request for performing a circuit switched network service; and a processing component **504,** which is connected to the first receiving component **502,** configured to interact with a user equipment corresponding to the request, and process the circuit switched network service.

In the above-mentioned example embodiments, receiving, by the first receiving component **502,** the request for performing the circuit switched network service, and interacting, by the processing component **504,** with a user equipment corresponding to the above-mentioned request and processing the above-mentioned circuit switched network service solves the problem that the UE can receive the circuit switched network service without falling back to the circuit switched network, which avoids the case where the UE falls back to the circuit switched network to receive the circuit switched network service, thereby reducing network consumption and enhancing the network efficiency, and being helpful to improve the user experience.

In the described embodiment, the above-mentioned first receiving component **502** receives the above-mentioned request forwarded by a VLR.

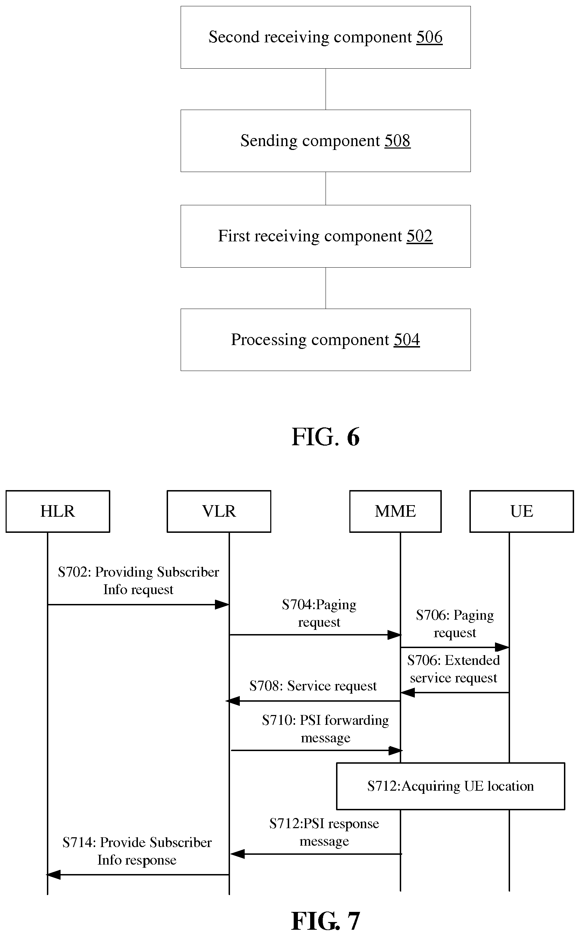

In order to successfully complete the forwarding of the above-mentioned circuit switched network service, in the present example embodiment, as shown in Fig. 6, the above-mentioned apparatus for processing the circuit switched network service further includes: a second receiving component **506,** configured to receive a paging message sent by a visitor location register (VLR), wherein the paging message includes first indication information which is used for indicating that the VLR supports the forwarding of the circuit switched network service; and a sending component **508,** which is connected to a second receiving component **506,** configured to send second indication information to the VLR, wherein the second indication information is used for indicating that the mobility management entity supports the forwarding of the circuit switched network service, and receive the circuit switched network service forwarded by the VLR.

In the described embodiment, the above-mentioned processing component **504** includes: a processing unit, configured to acquire subscriber information of the user equipment in a case where the circuit switched network service is a Provide Subscriber Info (PSI) service; and a sending unit, which is connected to the processing unit, configured to feed back the subscriber information to the VLR.

In the described embodiment, the above-mentioned processing unit is further configured to send supplemental content requested by a call-irrelevant supplementary service to the above-mentioned user equipment to execute the above-mentioned call-irrelevant supplementary service in a case where the circuit switched network service is the call-irrelevant supplementary service; and the above-mentioned sending unit, further configured to feed back an execution result of the above-mentioned user equipment to the above-mentioned VLR.

In order to enhance the network efficiency, in the present example embodiment, the above-mentioned apparatus for processing a circuit switched network service further includes: the above-mentioned second receiving component **506,** further configured to receive a paging message sent by the above-mentioned VLR, wherein the above-mentioned paging message includes third indication information which is used for indicating that the above-mentioned VLR does not support the forwarding of the above-mentioned circuit switched network service; and/or the above-mentioned sending component **508,** further configured to send fourth indication information to the above-mentioned VLR, wherein the fourth indication information is used for indicating that the above-mentioned mobility management entity does not support the forwarding of the above-mentioned circuit switched network service; and a triggering component, which is connected to the above-mentioned second receiving component **506** and/or sending component **508,** configured to trigger the flow of making the above-mentioned user equipment fall back to a circuit switched network.

In the present example embodiment, an MME is provided, and the MME includes any one of the above-mentioned apparatus for processing the circuit switched network service.

The above-mentioned various embodiments will be described in detail below in conjunction with the accompanying drawings.

In the present example embodiment, above-mentioned mobility management entity takes an MME as an example. Fig. 7 is an interaction diagram of using a method for processing a circuit switched network service to process a PSI service according to an embodiment of the present invention; and as shown in Fig. 7, the processing flow includes the following steps:
Step S702: a VLR receives a PSI message sent by an HLR.
Step S704: since UE registers on the VLR via SGs interface location update, the VLR sends the SGs interface Paging to the MME, a flag (equivalent to the above-mentioned first indication information) indicating the VLR supports PSI forwarding is carried.
Step S706: the MME initiates a paging process within the LTE network, and the UE returns an extended service request.
Step S708: the MME determines that it supports SGs forwarding of the PSI, then sends an SGs interface service request to the VLR, with the message carrying a flag (equivalent to the above-mentioned second indication information) indicating the MME allows PSI forwarding.
Step S710: the VLR receives the message, and forwards a PSI service request (equivalent to the above-mentioned request for performing the circuit switched network service) to the MME.
Step S712: the MME obtains information about the UE, and returns same to the VLR in a PSI response message.
Step S714: the VLR returns a PSI response to the HLR.

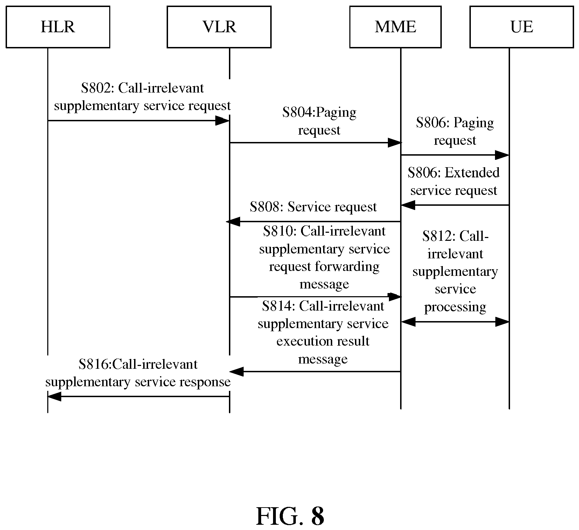

In the present example embodiment, the above-mentioned mobility management entity takes an MME as an example. Fig. 8 is an interaction diagram of using a method for processing a circuit switched network service to process a call-irrelevant supplementary service according to an embodiment of the present invention; and as shown in Fig. 8, the processing flow includes the following steps:
Step S802: a VLR receives a call-irrelevant supplementary service message sent by an HLR.
Step S804: since UE registers on the VLR via SGs interface location update, the VLR sends the SGs interface Paging (paging message) to the MME, carrying a flag (equivalent to the above-mentioned first indication information) of the VLR supporting forwarding of call-irrelevant supplementary service.
Step S806: the MME initiates a paging process within the LTE network, and the UE returns an extended service request.
Step S808: the MME determines that it supports SGs forwarding of the call-irrelevant supplementary service, and sends an SGs interface service request to the VLR, with the message carrying a flag (equivalent to the above-mentioned second indication information) indicating the MME allows the forwarding of call-irrelevant supplementary service.
Step S810: the VLR receives the message, and forwards the call-irrelevant supplementary service request (equivalent to the above-mentioned request for performing the circuit switched network service) to the MME.
Step S812: the MME sends the content of the supplementary service to the UE, and the UE returns a response.
Step S814: the MME returns an execution result of the call-irrelevant supplementary service to the VLR.
Step S816: the VLR returns a call-irrelevant supplementary service response to the HLR.

When the VLR processes a non-call service in an example embodiment, a new VLR address registered by the subscriber after falling back is delivered to an original VLR receiving a service request. The original VLR may forward the service request to the new VLR for processing according to the address so that the service is able to perform normally.

It can be seen from the above-mentioned description that above-mentioned example embodiments realize the following technical effects: according to the above-mentioned steps, receiving, by the mobility management entity, the request for performing the circuit switched network service, and interacting with a user equipment corresponding to the above-mentioned request and processing the above-mentioned circuit switched network service solves the problem that the UE can receive the circuit switched network service without falling back to the circuit switched network, which avoids the case where the UE falls back to the circuit switched network to receive the circuit switched network service, thereby reducing network consumption and enhancing the network efficiency, and being helpful to improve the user experience.

Obviously, those skilled in the art should know that each of the mentioned components or steps of the present application can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The above description is only preferred embodiments of the present invention and is not intended to limit the present invention, and the present invention can have a variety of changes and modifications within the scope of the appended claims for those skilled in the art. Any amendments, substitutions, improvements, etc. within the principle of the present invention are all included in the scope of the protection as defined by the appended claims of the present invention.

### Industrial Applicability

The above-mentioned technical solutions provided by the embodiments of the present invention can be applied in a process of a circuit switching network services; by adopting the technical means of receiving, by the mobility management entity, the request for performing the circuit switched network service, and interacting with a user equipment corresponding to the above-mentioned request and processing the above-mentioned circuit switched network service, the problem in the prior art that the UE needs to fall back to the traditional circuit switched network so as to receive the circuit switched network service is solved, thereby reducing the network consumption, enhancing the network efficiency.

## Claims

1. A method performed by a mobility management entity, MME, for processing a non-call circuit switched network service, comprising:
receiving (S402, S710) from a visitor location register, VLR, a request for performing a non-call circuit switched network service
interacting (S404, S712) with a user equipment, UE, corresponding to the request, to acquire a response as requested by the non-call circuit switched network service request;
sending (S712) the response of the UE to the VLR
wherein before receiving the request for performing the non-call circuit switched network service, the method further comprises:
receiving (S704) a paging message sent by the VLR, wherein the paging message comprises a first indication information which is used for indicating that the VLR supports the forwarding of the non-call circuit switched network service; and
sending (710) a second indication information to the VLR, wherein the second indication information is used for indicating that the MME supports the forwarding of the non-call circuit switched network service.

2. The method according to claim 1, **characterized in that** interacting, with the UE corresponding to the request, and sending the response of the UE to the VLR comprises:
acquiring subscriber information of the UE in a case where the non-call circuit switched network service is a Provide Subscriber Info, PSI, service; and
feeding back the subscriber information to the VLR.

3. The method according to claim 1, **characterized in that** interacting, with the UE corresponding to the request, and sending the response of the UE to the VLR comprises:
sending supplemental content requested by a call-irrelevant supplementary service to the UE to execute the call-irrelevant supplementary service in a case where the non-call circuit switched network service is the call-irrelevant supplementary service; and
feeding back an execution result of the UE to the VLR.

4. A mobile management entity, MME, comprising:
a first receiving component (502), configured to receive a request for performing a non-call circuit switched network service from a visitor location register, VLR; and
a processing component (504), configured to process interacting with a user equipment, UE, corresponding to the request, to acquire a response as requested by the non-call circuit switched network service request; and send the response of the UE to the VLR;
wherein the MME further comprises:
a second receiving component (506), configured to receive a paging message sent by the VLR, wherein the paging message comprises a first indication information which is used for indicating that the VLR supports the forwarding of the non-call circuit switched network service; and
a sending component (508), configured to send a second indication information to the VLR, wherein the second indication information is used for indicating that the MME supports the forwarding of the non-call circuit switched network service.

5. The MME according to claim 4, **characterized in that** the processing component (504) comprises:
a processing unit, configured to acquire subscriber information of the UE in a case where the non-call circuit switched network service is a Provide Subscriber Info, PSI, service; and
a sending unit, configured to feed back the subscriber information to the VLR.

## Patentansprüche

1. Verfahren, das durch eine Mobility Management Entity, MME, zum Verarbeiten eines leitungsvermittelten Netzdienstes durchgeführt wird, bei dem es sich nicht um einen Anruf handelt, umfassend:
Empfangen (S402, S710) von einem Besucherstandortregister, VLR, einer Anforderung zum Durchführen eines leitungsvermittelten Netzdienstes, bei dem es sich nicht um einen Anruf handelt,
mit einem der Anforderung entsprechenden Benutzergerät (user equipment, UE) Interagieren (S404, S712), um wie durch die Anforderung des leitungsvermittelten Netzdienstes angefordert, bei dem es sich nicht um einen Anruf handelt, eine Antwort zu erhalten;
Senden (S712) der Antwort des UE an das VLR;
wobei vor dem Empfangen der Anforderung zum Durchführen des leitungsvermittelten Netzdienstes, bei dem es sich nicht um einen Anruf handelt, das Verfahren ferner umfasst:
Empfangen (S704) einer durch das VLR gesendeten Funkrufnachricht (paging message), wobei die Funkrufnachricht eine erste Anzeigeinformation umfasst, die verwendet wird, um anzuzeigen, dass das VLR die Weiterleitung des leitungsvermittelten Netzdienstes unterstützt, bei dem es sich nicht um einen Anruf handelt; und
Senden (710) einer zweiten Anzeigeinformation an das VLR, wobei die zweite Anzeigeinformation verwendet wird, um anzuzeigen, dass die MME die Weiterleitung des leitungsvermittelten Netzdienstes unterstützt, bei dem es sich nicht um einen Anruf handelt.

2. Verfahren nach Anspruch 1, **dadurch gekennzeichnet, dass** das Interagieren mit dem der Anforderung entsprechenden UE und Senden der Antwort des UE an das VLR umfasst:
Erfassen von Teilnehmerinformationen des UE in einem Fall, in dem der leitungsvermittelte Netzdienst, bei dem es sich nicht um einen Anruf handelt, ein Dienst zum Bereitstellen von Teilnehmerinformationen, PSI, ist; und
Rückmelden der Teilnehmerinformationen an das VLR.

3. Verfahren nach Anspruch 1, **dadurch gekennzeichnet, dass** das Interagieren mit dem der Anforderung entsprechenden UE und Senden der Antwort des UE an das VLR umfasst:
Senden von durch einen anrufirrelevanten Zusatzdienst angeforderten Zusatzinhalten an das UE, um den anrufirrelevanten Zusatzdienst in einem Fall auszuführen, in dem der leitungsvermittelte Netzwerkdienst, bei dem es sich nicht um einen Anruf handelt, der anrufirrelevante Zusatzdienst ist; und
Rückmelden eines Ausführungsergebnisses des UE an das VLR.

4. Mobile Management Entity, MME, umfassend:
eine erste Empfangskomponente (502), die konfiguriert ist, um eine Anforderung zum Durchführen eines leitungsvermittelten Netzdienstes, bei dem es sich nicht um einen Anruf handelt, von einem Besucherstandortregister, VLR, zu empfangen; und
eine Verarbeitungskomponente (504), die konfiguriert ist, um das Interagieren mit einem der Anforderung entsprechenden Benutzergerät, UE, zu verarbeiten, um wie durch die Anforderung des leitungsvermittelten Netzdienstes angefordert, bei dem es sich nicht um einen Anruf handelt, eine Antwort zu erhalten; und die Antwort des UE an das VLR zu senden;
wobei die MME ferner umfasst:
eine zweite Empfangskomponente (506), die konfiguriert ist, um eine durch das VLR gesendete Funkrufnachricht zu empfangen, wobei die Funkrufnachricht eine erste Anzeigeinformation umfasst, die verwendet wird, um anzuzeigen, dass das VLR das Weiterleiten des leitungsvermittelten Netzdienstes unterstützt, bei dem es sich nicht um einen Anruf handelt; und
eine Sendekomponente (508), die konfiguriert ist, um eine zweite Anzeigeinformation an das VLR zu senden, wobei die zweite Anzeigeinformation verwendet wird, um anzuzeigen, dass die MME das Weiterleiten des leitungsvermittelten Netzdienstes unterstützt, bei dem es sich nicht um einen Anruf handelt.

5. MME nach Anspruch 4, **dadurch gekennzeichnet, dass** die Verarbeitungskomponente (504) umfasst:
eine Verarbeitungseinheit, die konfiguriert ist, um Teilnehmerinformationen des UE in einem Fall zu erhalten, in dem der leitungsvermittelte Netzdienst, bei dem es sich nicht um einen Anruf handelt, ein Dienst zum Bereitstellen von Teilnehmerinformationen, PSI, ist; und
eine Sendeeinheit, die konfiguriert ist, um die Teilnehmerinformationen an das VLR zurückzumelden.

## Revendications

1. Procédé mis en oeuvre par une entité de gestion de la mobilité (MME), afin de traiter un service de réseau à commutation de circuits sans appel, comprenant:
recevoir (S402, S710) d'un registre de localisation de visiteur, VLR, une demande d'exécution d'un service de réseau à commutation de circuits sans appel ;
interagir (S404, S712) avec un équipement utilisateur, UE, correspondant à la demande, afin d'obtenir une réponse comme demandée par la demande de service de réseau à commutation de circuits sans appel ;
envoyer (S712) la réponse de l'UE au VLR ;
dans lequel, avant de recevoir la demande d'exécution du service de réseau à commutation de circuits sans appel, le procédé comprend en outre les étapes consistant à :
recevoir (S704) un message de radiomessagerie envoyé par le VLR, dans lequel le message de radiomessagerie comprend une première information d'indication qui est utilisée pour indiquer que le VLR prend en charge le transfert du service de réseau à commutation de circuits sans appel ; et
envoyer (710) une seconde information d'indication au VLR, dans lequel la seconde information d'indication est utilisée pour indiquer que la MME prend en charge le transfert du service de réseau à commutation de circuits sans appel.

2. Procédé selon la revendication 1, **caractérisé en ce que** l'interaction avec l'UE correspondant à la demande et l'envoi de la réponse de l'UE au VLR comprennent :
l'acquisition des informations d'abonné de l'UE dans le cas où le service de réseau à commutation de circuits sans appel est un service de fourniture d'informations d'abonné, PSI; et
renvoyer les informations d'abonné au VLR.

3. Procédé selon la revendication 1, **caractérisé en ce que** l'interaction avec l'UE correspondant à la demande et l'envoi de la réponse de l'UE au VLR comprennent :
l'envoi d'un contenu supplémentaire demandé à l'UE par un service supplémentaire sans rapport avec l'appel pour exécuter le service supplémentaire sans rapport avec l'appel dans le cas où le service de réseau à commutation de circuits sans appel est le service supplémentaire sans rapport avec l'appel ; et
le renvoi d'un résultat d'exécution de l'UE au VLR.

4. Entité de gestion mobile, MME, comprenant :
un premier composant de réception (502), configuré pour recevoir une demande d'exécution d'un service de réseau à commutation de circuits sans appel provenant d'un registre de localisation de visiteur, VLR ; et
un composant de traitement (504), configuré pour traiter une interaction avec un équipement utilisateur, UE, correspondant à la demande, afin d'obtenir une réponse comme demandée par la demande de service de réseau à commutation de circuits sans appel ; et envoyer la réponse de l'UE au VLR ;
dans lequel la MME comprend en outre :
un second composant de réception (506), configuré pour recevoir un message de radiomessagerie envoyé par le VLR, dans lequel le message de radiomessagerie comprend une première information d'indication qui est utilisée pour indiquer que le VLR prend en charge le transfert du service de réseau à commutation de circuits sans appel ; et
un composant d'envoi (508), configuré pour envoyer une seconde information d'indication au VLR, dans lequel la seconde information d'indication est utilisée pour indiquer que la MME prend en charge le transfert du service de réseau à commutation de circuits sans appel.

5. MME selon la revendication 4, **caractérisée en ce que** le composant de traitement (504) comprend :
une unité de traitement, configurée pour acquérir des informations d'abonné de l'UE dans un cas où le service de réseau à commutation de circuits sans appel est un service de fourniture d'informations d'abonné, PSI; et
une unité d'envoi, configurée pour renvoyer les informations d'abonné au VLR.
